Europäisches Patentamt

European Patent Office

Office européen des brevets

(11) Publication number: **0 429 300 A2**

# EUROPEAN PATENT APPLICATION

(21) Application number: 90312669.6

(22) Date of filing: 20.11.90

(51) Int. Cl.⁵: **H04Q 11/04**, H04M 11/06

(30) Priority: 20.11.89 JP 299756/89

(43) Date of publication of application:
29.05.91 Bulletin 91/22

(84) Designated Contracting States:
DE FR GB

(71) Applicant: FUJITSU LIMITED
1015, Kamikodanaka Nakahara-ku
Kawasaki-shi Kanagawa 211(JP)

(72) Inventor: Hasegawa, Kenichi
Gurandouiru-haitsu 301, 1555-4,
Higashinaganuma
Inagi-shi, Tokyo 206(JP)
Inventor: Ogawa, Satoshi, Mezon do Noa
Seisekisakuragaoka 335, 61-1, Ichinomiya
Tama-shi, Tokyo 206(JP)

(74) Representative: Fane, Christopher Robin King
et al
HASELTINE LAKE & CO. Hazlitt House 28
Southampton Buildings Chancery Lane
London, WC2A 1AT(GB)

(54) System of a plurality of terminal apparatuses respondent to a call in a predetermined order.

(57) A terminal system containing a plurality of terminal apparatuses (9, 106) which are connected through a two-way bus line to a communication network. Each of the plurality of terminal apparatuses (9, 106) comprises: an incoming call detecting unit (28, 17) for detecting an incoming call to which the terminal apparatus can respond, where the incoming call detecting unit belongs to the terminal apparatus; and a responding unit (23, 12, 18) for responding to an incoming call which is detected in the incoming call detecting unit (28, 17), where the responding unit (23, 12, 18) has a response time which is needed to respond to the incoming call, and is intrinsic to each term nal apparatus. Each of the plurality of terminal apparatuses further contains a timer unit (24, 13, 14, 15) for detecting that a time elapsed from a time at which an incoming call is detected in the incoming call detecting unit (28, 17), reaches a preset time. The above responding unit (23, 12, 18) in each terminal apparatus starts an operation of responding to the incoming call when the timer unit detects that the above elapsed time reaches the preset time; and an order of priority to respond to an incoming call is predetermined over the plurality of terminal apparatuses, and lengths of the preset times in the plurality of terminal apparatuses are preset in the order of the predetermined priority.

EP 0 429 300 A2

## Fig. 10

## Fig. 11

2

# SYSTEM OF A PLURALITY OF TERMINAL APPARATUSES RESPONDENT TO A CALL IN A PREDETERMINED ORDER

BACKGROUND OF THE INVENTION
(1) Field of the Invention

The present invention relates to a terminal system which is connected to a communication network and contains a plurality of terminal apparatuses, where the plurality of terminal apparatuses are connected to the communication network through a two-way bus line. The present invention relates, in particular, to an ISDN (Integrated Services Digital Network) terminal system which is connected to an ISDN network, and contains a plurality of ISDN terminal apparatuses, such as a telephone set, a facsimile terminal apparatus, a personal computer, and the like. A plurality of terminal apparatuses can be connected to an ISDN network through a digital service unit (DSU) at each subscriber location.

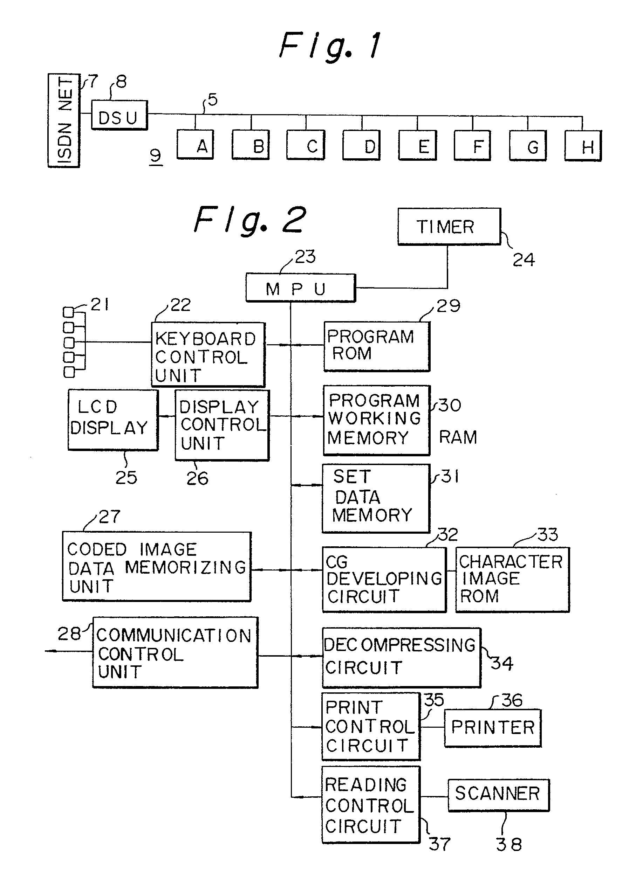

Figure 1 shows an overall construction of an ISDN terminal system to which the present invention is applicable. In Fig. 1, reference numeral 7 denotes an ISDN network, 8 denotes a digital service unit (DSU), 5 denotes a two-way bus line, 9 denotes a plurality of terminal apparatuses, and the terminal apparatuses are respectively denoted by A, B, C, D, E, F, G, and H. In Fig. 1, a plurality of ISDN terminal apparatuses are connected to a digital service unit through a two-way bus line.

For example, a plurality of facsimile terminal apparatuses are connected to a digital service unit through a two-way bus line, and some subscribers may require use of a part of the plurality of facsimile terminal apparatuses for sending facsimile data only, and the other part of the plurality of facsimile terminal apparatuses for receiving facsimile data only. When a request to set up a call from an ISDN network is reaches at the digital service unit, the request to set up a call is supplied to all the terminal apparatuses which are connected to the digital service unit through the two-way bus line. Each of the terminal apparatuses responds to the request when the above request is supplied thereto. However, generally a response time of each ISDN terminal apparatus is intrinsic to each terminal apparatus due to individual variations of the constructions of the terminal apparatuses, and further varies depending on whether or not a microprocessor which must process the responding operation is busy when the terminal apparatus receives the above request. The ISDN network accepts and acknowledges a response from a terminal apparatus which first responds to the above request only. Therefore, in spite of the above subscribers' request, generally, it is not known which terminal apparatus among all the terminal apparatuses first responds to the request.

In addition, when more than one terminal apparatus responds to the above request to set up a call through the two-way bus line, the responses collide with each other on the two-way bus line, and the responses cannot be normally received by the ISDN network.

(2) Description of the Related Art

In the prior art, the Japanese Unexamined Patent Publication No. 64.18341 discloses a technique wherein, in a user's terminal station which is connected to an ISDN network, and which contains a plurality of terminal apparatuses connected to a network termination unit through a bus line, each terminal apparatus comprises an incoming call indication (alerting) unit, a signal processing unit for receiving a SETUP message from an exchange, returning an ALERT message to the exchange and outputting an alert start signal when the incoming call can be received thereat, and outputting an alert stop signal when a RELEASE signal is received thereat from the exchange. Each terminal apparatus further comprises: a timer which starts counting time responding to the above alert start signal, starts an operation of the incoming call indication (alerting) unit when a preset time has been counted, and stops the time counting responding to the alert stop signal; and a priority order switching unit for supplying in advance the preset time to the timer in accordance with a priority order. When a SETUP message is received in the above terminal apparatuses, all the terminal apparatuses return an ALERT message to the exchanges, and after a shortest preset time among the preset times which are preset in all the terminal apparatuses has elapsed, the incoming call indication unit in a terminal apparatus wherein the shortest preset time is preset in the timer, first starts an indication of the incoming call (starts ringing). Responding to the ringing, the user responds to the incoming call to send a CONNECT message, and the exchange returns a RELEASE message to all the terminal apparatuses other than the terminal apparatus which sent the CONNECT message. An example sequence of the above operation is shown in Fig. 3 of the JPP64-18341.

However, according to the above technique, all the terminal apparatuses return an ALERT, message when receiving a SETUP message to the exchange, and all the terminal apparatuses successively start ringing for alerting operators in the order of as above. Therefore, a terminal apparatus at which an incoming call is received, is actually determined by manual operation by the operator.

In the prior art, the Japanese unexamined Patent Publication No. 1-192249 discloses technique wherein in a user's terminal station which is connected to an ISDN network, and which contains a plurality of terminal apparatuses connected to a network termination unit through a bus line, each terminal apparatus comprises: a connection information registering means for registering a number of calling parties from which the incoming calls are expected to be received, and priority orders corresponding to the calling parties which are assigned to the terminal apparatus; an incoming call determining means for determining whether or not an incoming call is acceptable; and a control means for controlling the timing of sending of a response to the acceptable incoming call, based on the connect on information in the connection information registering means. When a SETUP message is received, a number of the calling party in the SETUP message is detected, and a priority order corresponding to the number is searched in the connection information registering means (calling parties' table). The control means sends a request to immediately send a response to a response sending portion when the priority order is the first order; or starts the timer, and sends a request to send a response to a response sending portion when a predetermined time has elapsed after the timer starts when the priority order is lower than the first order.

However, according to the above technique, very complicated constructions including the above connection information registering means must been provided. In additicn, the above terminal station cannot respond to an incoming call from a calling part/ which is not determined as acceptable, i.e., which is not registered in advance.

## SUMMARY OF THE INVENTION

An object of the present invention is to provide a terminal system containing a plural of of terminal apparatuses which are connected to communication network through a two-way bus line, wherein the terminal apparatuses automatically respond to an incoming call in an order the user of the systen requests, without a collision of the response signals, and each terminal apparatus is realized by a simple construction.

According to the present invention, there is provided a terminal system containing a plurality of terminal apparatuses, an interface unit, and a two-way bus line connecting thereto the plurality of terminal apparatuses. The interface unit, which is connected on one side thereof to an communication network, and on the other side thereof to the above two-way bus line, functions as an interface between the communication network and each of the plurality o terminal apparatuses regarding two-way transmission of data signals and control signals for the transmission of the data signals and control signals. Each of the plurality of terminal apparatuses comprises an incoming call detecting unit and a responding unit. The incoming call detecting unit detects an incoming call to which the terminal apparatus can respond, where the incoming call detecting unit belongs to the terminal apparatus, and the responding unit responds to an incoming call which is detected in the incoming call detecting unit, where the responding unit has a response time which is needed to respond to the incoming call, and is intrinsic to each terminal apparatus. Each of the plurality of terminal apparatuses further contains a timer unit which detects when a time elapsed from a time at which an incoming call is detected in the incoming call detecting unit, reaches a preset time. The above responding unit in each terminal apparatus starts an, operation of responding to the incoming call when the timer unit detects that the above elapsed time reaches the preset time; and an order of priority to respond to an incoming call is predetermined over the plurality of terminal apparatuses, and lengths of the preset times in the plurality of terminal apparatuses are preset in the order of the predetermined priority.

## BRIEF DESCRIPTION OF THE DRAWINGS

In the drawings:

Figure 1 shows an overall construction of the ISDN terminal system to which the present invention is applicable;

Figure 2 shows the construction of a facsimile terminal apparatus which is connected to the two-way bus line 5 of Fig. 1, according to the first embodiment of the present invention;

Figure 3 is a flowchart of the operation of the facsimile terminal apparatus of Fig. 2 according to the first embodiment of the present invention;

Figures 4 to 6 are each an example sequence diagram of an operation of the ISDN terminal system when a SETUP message is received from the ISDN network, where facsimile terminal apparatuses in the ISDN terminal system, each having a construction s shown in Fig. 2 and operating as shown in Fig. 3, are connected to a digital service unit as shown in Fig. 1;

Figure 7 shows an example of an operation panel which contains the keyboard 21 and the LCD display 25 of Fig. 2;

Figure 8 shows an example sequence of the keyboard operations and information displayed on the LCD display 21;

Figure 9 is a flowchart of an operation of the operation panel of Fig. 7 for inputting a response time;

Figure 10 shows an overall construction of the terminal system which is connected to an analog communication network to which the present invention is applicable;

Figure 11 shows the construction of an ISDN terminal apparatus which is connected to the two-way bus line 20 of Fig. 10, according to the first embodiment of the present invention; and

Figure 12 is an example sequence of the operation of the terminal system containing a plurality (three as an example) of terminal apparatuses each having a construction as shown in Fig. 11, and the preset times in the terminal apparatuses are set as t1, t2, and t3, respectively, where t1 < t2 < t3.

## DESCRIPTION OF THE PREFERRED EMBODIMENTS
### (1) First Embodiment

Figure 2 shows the construction of a facsimile terminal apparatus which is connected to the two-way bus line 5 of Fig. 1, according to the first embodiment of the present invention. In Fig. 2, reference numeral 21 denotes a keyboard, 22 denotes a key input control unit, 23 denotes an MPU, 24 denotes a timer, 25 denotes an LCD display unit, 26 denotes a display control unit, 27 denotes a coded image data memorizing unit, 28 denotes a communication control unit, 29 denotes a program ROM, 30 denotes a program working memory, 31 denotes a setting data memory, 32 denotes a CG developing circuit, 33 denotes a character image ROM, 34 denotes a decompression circuit, 35 denotes a print control circuit, 36 denotes a printer, 37 denotes a reading control circuit, and 38 denotes a scanner..

The keyboard 21 is provided for an operator to input instructions and data to be set in the facsimile terminal apparatus, and the instructions and data input from the keyboard 21 are transferred through the keyboard control circuit 22 to the MPU 23.

The LCD display unit 25 displays information for the operator, for example, when the operator inputs data and instructions, or when the operator requests to see the state of the facsimile terminal apparatus. The display control unit 26 controls the operation of the LCD display unit 25.

The MPU 23 executes a program which is stored in the program ROM 29, using the program working memory 30 and the setting data memory 31 to control the overall operation of the facsimile terminal apparatus of Fig. 2.

The character image ROM 33 memorizes character images corresponding to character codes. The CG developing circuit 32 generates a character image by referring to the character image ROM 33 for a character code which is supplied from the MPU 23.

The coded image data memorizing unit 27 is a buffer memory for temporarily storing coded data which is received through the communication control circuit 28 from the ISDN network.

The decompression circuit 34 is constructed by a hardware logic circuit, and decompresses (decodes) received coded data to bit map data, where the coded data is read from the coded image data memorizing unit 27. The decompressed data is printer by the printer 36 under the control of the print control circuit 35.

The scanner 38 and the reading control circuit 37 are provided for reading a draft or figure to be input.

The timer 24 can start or stop counting time, reset the count, and be preset for the preset time, under the control of the MPU 23. The timer 24 starts the counting of time under the control of the MPU 23 when a SETUP message is received from the ISDN network, and informs the MPU 23 of a time out of the preset time to make the MPU 23 send a CONNECT message to the ISDN network.

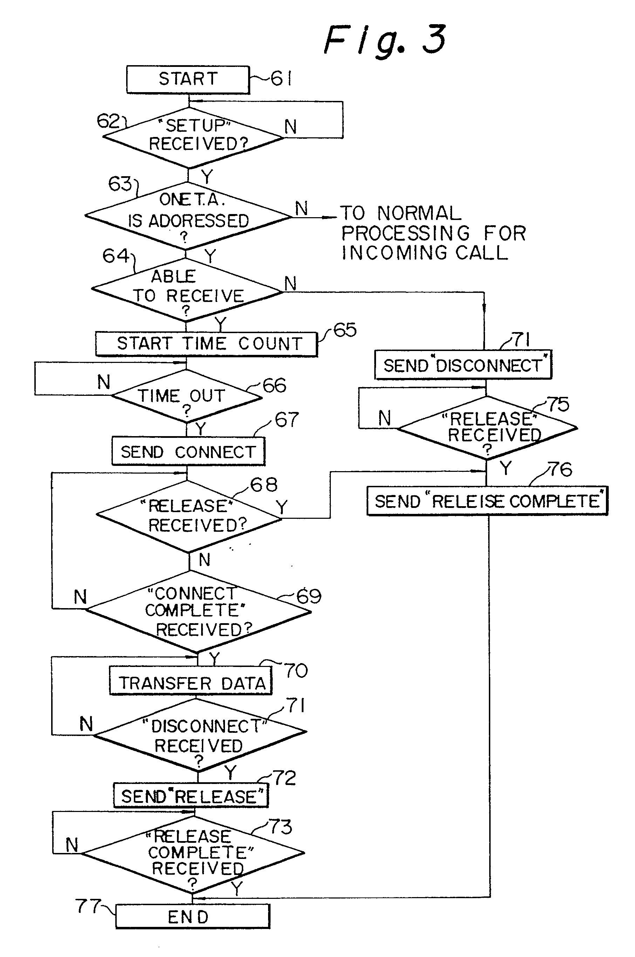

Figure 3 is a flowchart of the operation of the facsimile terminal apparatus of Fig. 2 according to the second embodiment of the present invention.

In the step 61 of Fig. 3, an operation of receiving a message begins. In the step 62, it is determined whether or not a SETUP message is received. When yes is determined in the step 62, it is determined whether or not the SETUP message addresses a particular one of the terminal apparatuses in the terminal system, in the step 63. When yes is determined in the step 63, data communication proceeds in the conventional manner wherein no control is carried out for the timing of response. When no is determined in the step 63, it is determined whether or not the terminal apparatus is in a state where it is able to receive the SETUP message in the step 64. When no is determined in the step 64, for example, due to running out of paper, a DISCONNECT message is sent to the ISDN network in the step 74. Then, when a RELEASE message is received in the step 75, a RELEASE COMPLETE message is sent to the ISDN network in the step 76. Thus, the operation is completed in the step 77.

When yes is determined in the step 64, a time counting operation for a preset time begins in the step 65. When a time out of the preset time is determined in the step 66, a CONNECT message is sent to the ISDN network in the step 67. Then, when a RELEASE message is received in the step 68, the operation goes to the step 76 to complete the operation. When a RELEASE message is not received in the step 68, and a RELEASE COMPLETE message is received in the step 69, a transfer operation of facsimile data is carried out in the step 70. When all the data has been transferred, a DISCONNECT message is sent from the ISDN network. When the DISCONNECT message is received in the step 71, a RELEASE message is sent to the ISDN network in the step 72. Then, a RELEASE COMPLETE message is received in the step 73, the operation is completed in the step 7.

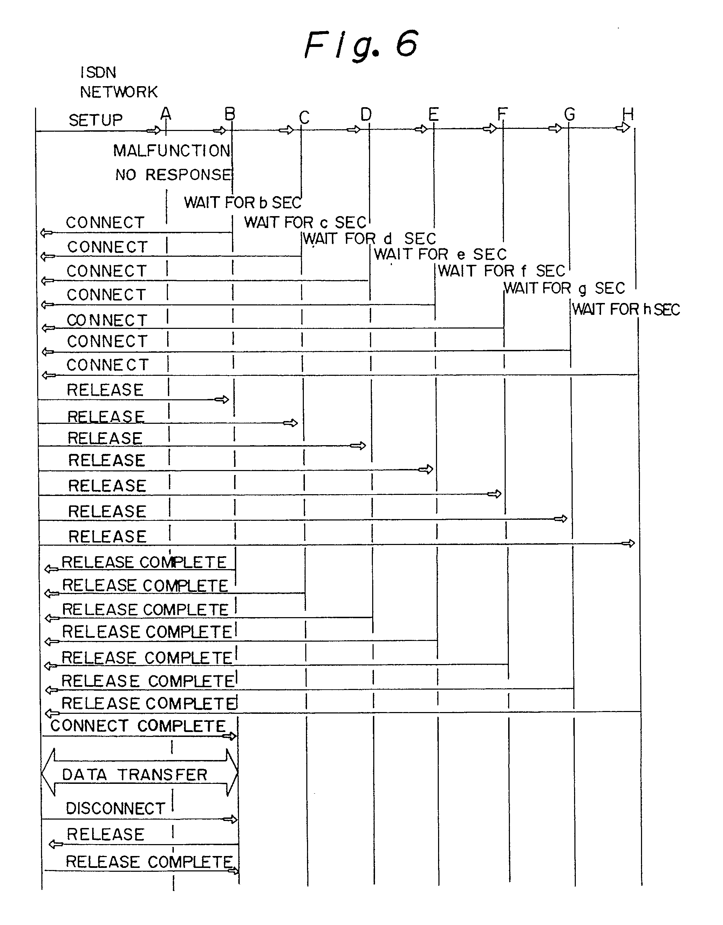

Figures 6 to 8 are each example sequence diagrams of an operation of the ISDN terminal system when a SETUP message is received from the ISDN network, where facsimile terminal apparatuses in the ISDN terminal system, each having a construction as shown in Fig. 2 and operating as shown in Fig. 3, are connected to a digital service unit as shown in Fig. 1. In the examples of Figs. 6 to 8, the preset times which are preset for the timers 12 in the facsimile terminal apparatuses A, B, C, D, E, F, G, and H, are respectively denoted by a, b, c, d, e, f, g, and h (seconds), where $a < b < c < d < e < f < g < h$.

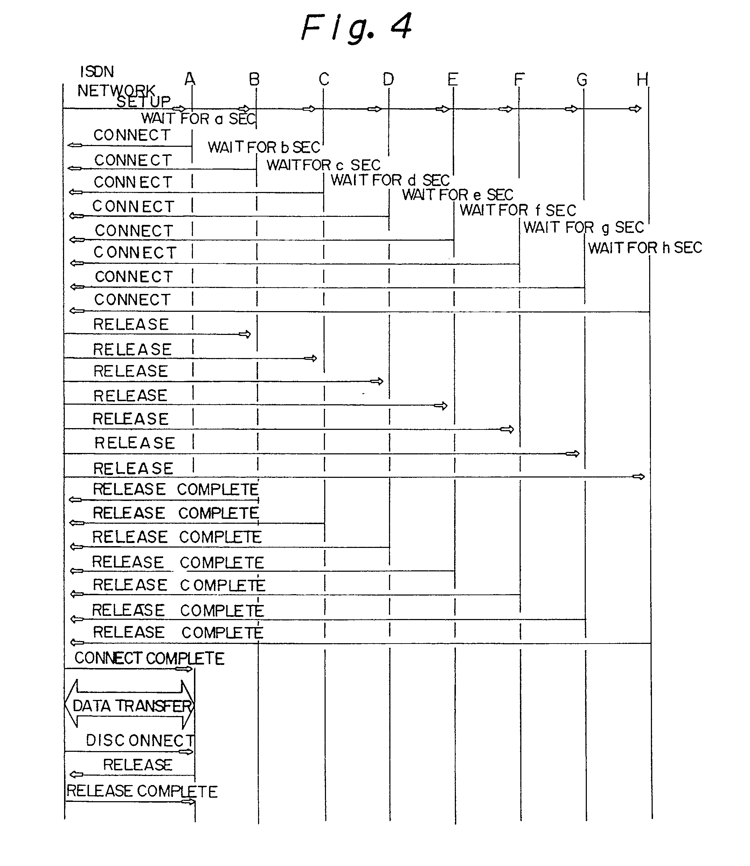

Figure 4 is an example sequence diagram for a case when all the terminal apparatuses A B, C, D, E, F, G, and H, are not busy. In the example of Fig. 4, when a SETUP message is received in the terminal system, the terminal apparatus A sends a CONNECT message to the ISDN network after an elapse of time a, the terminal apparatus B sends a CONNECT message to the ISDN network after an elapse of time b, the terminal apparatus C sends a CONNECT message to the ISDN network after an elapse of time c, the terminal apparatus D sends a CONNECT message to the ISDN network after an elapse of time d, the terminal apparatus E sends a CONNECT message to the ISDN network after an elapse of time e, the terminal apparatus F sends a CONNECT message to the ISDN network after an elapse of time f, the terminal apparatus G sends a CONNECT message to the ISDN network after an elapse of time g, and the terminal apparatus H sends a CONNECT message to the ISDN network after an elapse of time h. The ISDN network returns a CONNECT ACKNOWLEDGE message to one of the terminal apparatuses which first returned the CONNECT message to the network, and sends a RELEASE message to all the other terminal apparatuses B, C, D, E, F, G, and H The other terminal apparatuses B, C, D, E, F, G, and H return a RELEASE COMPLETE message to the network to complete communication between the network and the terminal apparatuses B, C, D, E, F, G, and H respectively. Thus, facsimile data is transferred to the terminal apparatus A which first returned the CONNECT message to the network, and a calling party through the ISDN network. When all the data has been transferred, a DISCONNECT message is transferred from the calling party through the ISDN network to the terminal system. Receiving the DISCONNECT message, the terminal apparatus A returns a RELEASE message to the network. The ISDN network returns a RELEASE COMPLETE message to complete the operation.

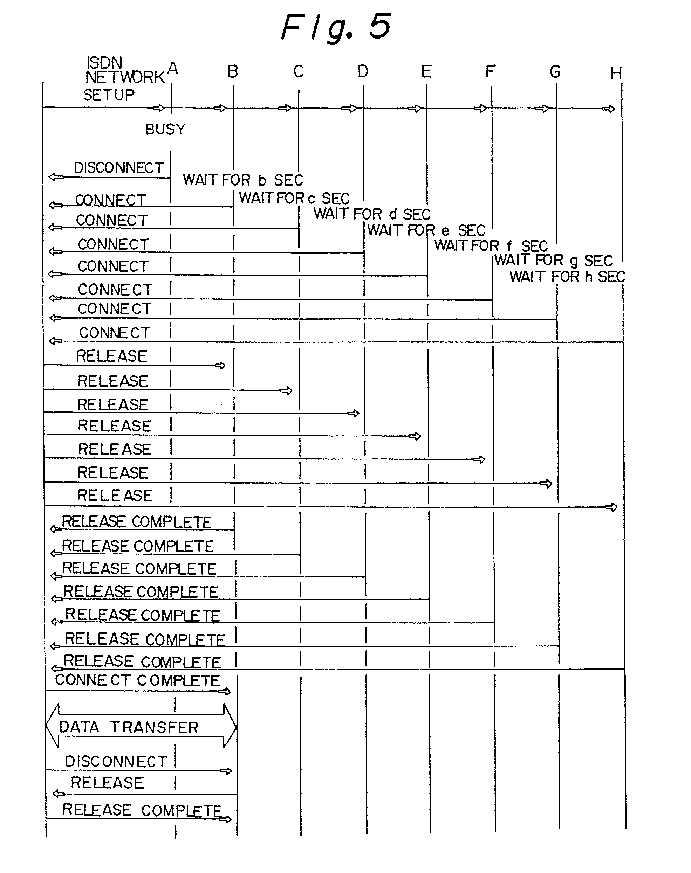

Figure 5 is an example sequence diagram for a case when the terminal apparatuses B, C, D, E, F, G, and H, except the terminal apparatus A, are not busy, but the terminal apparatus A is busy when a SETUP message is received in the terminal apparatus A. In the example of Fig. 5, when a SETUP message is received in the terminal system, the terminal apparatus A returns a DISCONNECT message to the ISDN network since the terminal apparatus A is busy, and the terminal apparatus B sends a CONNECT message to the ISDN network after an elapse of time b, the terminal apparatus C sends a CONNECT message to the ISDN network after an elapse of time c, .... , and the terminal apparatus H sends a CONNECT message to the ISDN network after an elapse of time h. Namely, in this example, the terminal apparatus B first returns the CONNECT message to the network, and therefore, the network returns a CONNECT ACKNOWLEDGE message to the terminal apparatus B only. Thus, facsimile data is transferred to the terminal apparatus B. In addition, the network sends a RELEASE message to all the other terminal apparatuses A, C, D, E, F, G, and H, and the other terminal apparatuses A, C, D, E, F, G, and H return a RELEASE COMPLETE message tO the network to complete communication between the network and the terminal apparatuses A, C, D, E, F, G, and H, respectively.

Figure 6 is an example sequence diagram for a case when all the terminal apparatuses A, B, C, D, E, F, G, and H, are not busy, but the terminal apparatus A is out of order when a SETUP message is received in the terminal apparatus A, and therefore the terminal apparatus A cannot respond to the SETUP message. In the example of Fig. 6, when a SETUP message is received in the terminal system, the terminal apparatus A cannot return any message to the ISDN network, and the terminal apparatus B sends a CONNECT message to the ISDN network after an elapse of time b, the terminal apparatus C sends a CONNECT message to the ISDN network after an elapse of time c, .... , and the terminal apparatus H sends a CONNECT message to the ISDN network after an elapse of time h. Namely, in this example, the terminal apparatus B first returns the CONNECT message to network, and therefore, the network returns a CONNECT ACKNOWLEDGE message to the terminal apparatus B only. Thus, a facsimile data is transferred to the terminal apparatus B. In addition, the network sends a RELEASE message to all the other terminal apparatuses A, C, D, E, F, G, and H, and the other terminal apparatuses A, C, D, E, F, G, and H return a RELEASE COMPLETE message to the network to complete communication. between the network and the terminal apparatuses A, C, D, E, F, G, and H, respectively.

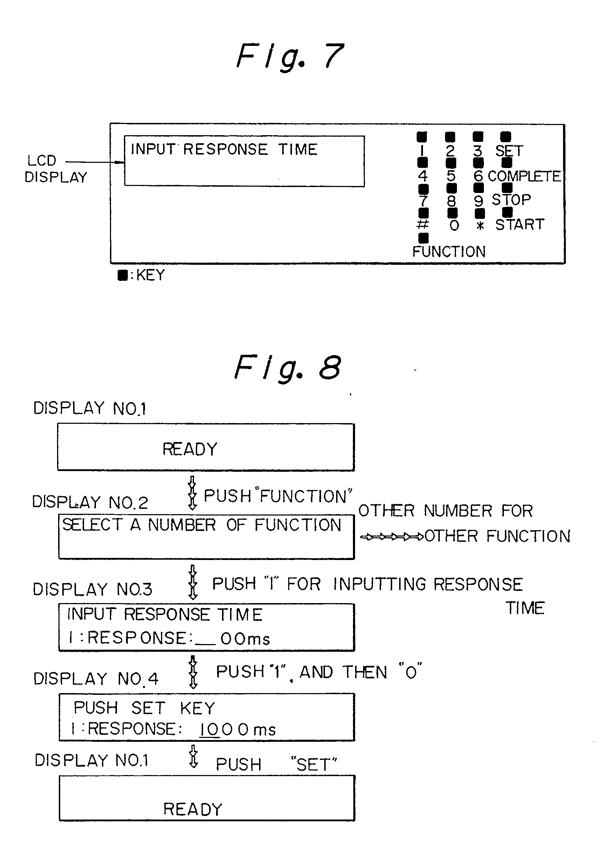

Figure 7 shows an example of an operation panel which contains the keyboard 21 and the LCD display 25 of Fig. 2. In the example of Fig. 7, the keyboard 21 contains keys which are denoted by "SET", "COMPLETE", "STOP", "START", and "FUNCTION", in addition to a ten keyboard.

Figure 8 shows an example of a sequence of the keyboard operations and information displayed on the LCD display 21.

In Fig. 8, the display No. 1 indicates "READY" which means that the operator can input an instruction or preset data. When the key "FUNCTION" is pushed, the display No. 2 appears, where the display No. 2 indicates "Select a number of function." In the example of Fig. 8, the operator then pushes the key "1" to register a preset time for presetting a response time of the terminal apparatus. Responding to the above key input, the display No. 3 appears, where the display No. 3 indicates "Input a response time. RESPONSE TIME: _00ms." In the example of Fig. 8, the operator then pushes the key "1" and "0". Responding to the above key input, the display No. 4 appears, where the display No. 4 indicates "Push the SET key. RESPONSE TIME: 1000ms." When the operator pushes the key "SET", the indication on the LCD display 21 returns to "READY".

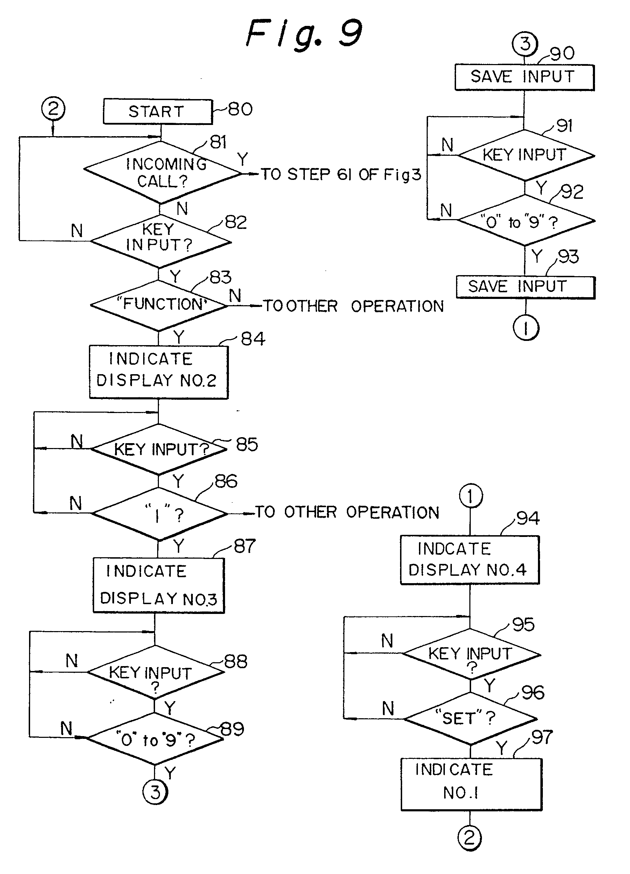

Figure 9 is a flowchart of an operation of the operation panel of Fig. 7 for presenting a response time. In Fig. 9, when it is determined that an incoming call is received in the terminal apparatus, in the step 81, the operation goes to Fig. 3. When it is determined that no incoming call is received in, the step 81, and it is determined that there is a key input in the step 82, it is determined whether or not the function key is pushed in the step 83. When no is determined in the step 83, the terminal apparatus goes to the other operation to wait for the other key operations which are not shown since that is out of the scope of the present invention.

When yes is determined in the tep 83, the LCD display 21 indicates the display No 2 in Fig. 8, in the step 84. Then, when it is determined in the steps 85 and 86, that the key "1" is pushed, the LCD display 21 indicates the display No. 3 in Fig. 8, in the step 87. When it is determined in the steps 88 and 89, that one of the keys "0" to "9" is pushed, the data corresponding to the key input is saved in the step 90. Then, when it is determined in the steps 91 and 92, that one of the keys "0" to "9" is pushed again, the key input is saved again in the step 93. Then, the LCD display 21 indicates the display No. 4 in Fig. 8, in the step 94. When it is determined in the steps 95 and 96, that the key "SET" is pushed, the indication of the LCD d splay 21 returns to the display No. 1 in Fig. 8, in the step 97.

(2) Second Embodiment

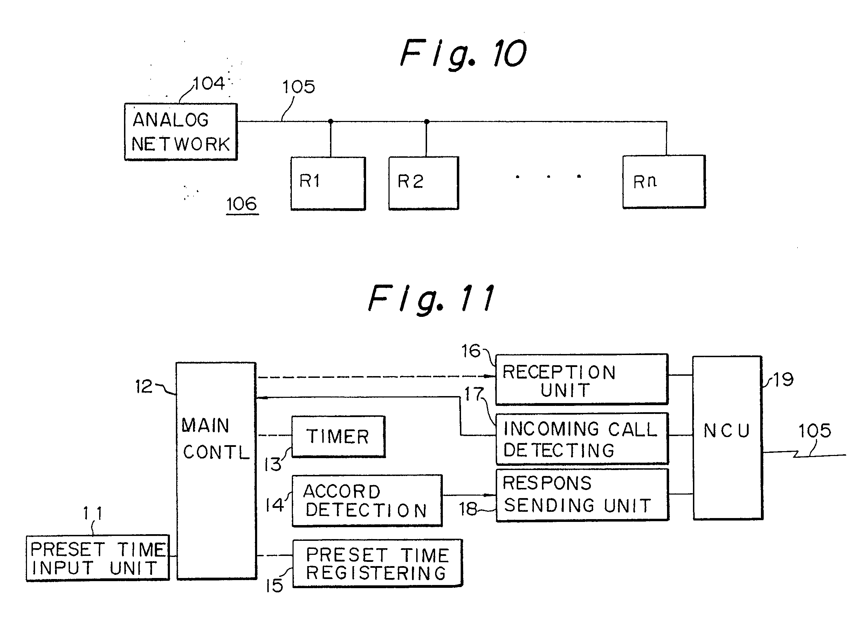

Figure 10 shows an overall construction of the terminal system which is connected to an analog communication network to which the present invention is applicable. In Fig. 10, reference numeral 104 denotes an analog communication network, 105 denotes a two-way bus line, and 106 denotes a plurality of terminal apparatuses, where the terminal apparatus are respectively denoted by R1, R2, ... Rn.

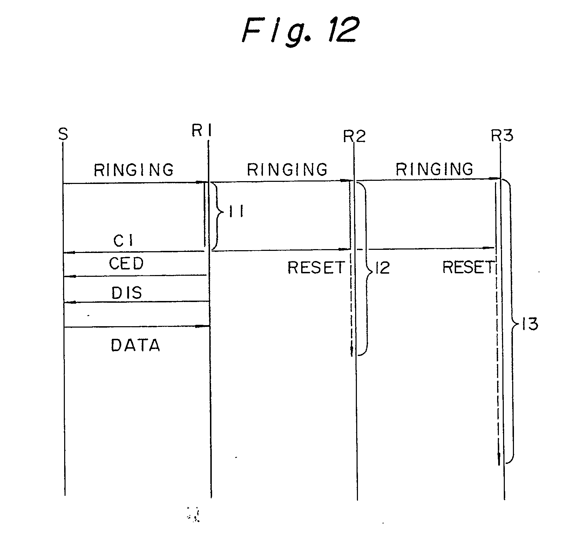

Figure 11 shows the construction of a data terminal apparatus which is connected to the two-way bus line 105 of Fig. 10, according to the second embodiment of the present invention. In Fig. 11, reference numeral 11 denotes a preset time input unit, 12 denotes a main control unit, 13 denotes a timer, 1. denotes an accord detection unit, 15 denotes a preset time memorizing unit, 16 denotes a reception unit, 17 denotes an incoming call detecting unit, 18 denotes a response sending unit, 19 denotes a network control unit (NCU), and 5 indicates the above two-way bus line 5 of Fig. 1. The main control unit 12, the accord detection unit 14, the preset time memorizing unit 15, and the response sending unit 18 are realized by software operation executed in a microcomputer comprised of an MPU, ROM, and RAM (not shown), and the functions of the above units are as follows.

The main control unit 12 controls all the operations of the terminal apparatus of Fig. 11.

The network control unit 19 controls a connection between the terminal apparatus of Fig. 11 and the analog communication network. For example, the network control unit 19 connects the terminal apparatus to the two way bus line 105, and detects and indicates an active ringing signal which is sent from the analog network. The incoming call detecting unit 18 detects and holds the active state of the ringing signal while the ringing signal is sent from the analog network, and the output of the incoming call detecting unit 18 to the main control unit 12. The main control unit 12 makes the timer 13 start counting time responding to the beginning of the active state of the above ringing signal, and makes the timer 13 stop the counting responding to the end of the active state of the ringing state and resets the timer 13.

An operator can input a preset time through the preset time input unit 11. The preset time input from the preset time input unit 11 is written in the preset time memorizing unit 15 under the control of the main control unit 12. The accord detection unit 14 compares the time count in the timer 13 and the preset time memorized in the preset time memorizing unit 15 bv the software, and activates the response sending unit 18 when an accord is detected between the time count in the timer 13 and the preset time memorized in the preset time memorizing unit 15. The response sending unit 18 makes the network control unit 19 return a response to the ringing, and sends a response signal $C_i$, a called party number CED and a capability in information DIS of the terminal apparatus to the network.

Figure 12 is an example sequence of the operation of the terminal system containing three terminal apparatuses R1, R2, and R3 in the form as shown in Fig. 10, where each terminal apparatus has a construction as shown in Fig. 11, and the preset times in the terminal apparatuses are set as t1, t2, and t3, respectively, and t1 < t2 < t3. The ringing signal is supplied to all the terminal apparatuses R1, R2, and R3. Receiving the above ringing signal, the timers 13 in all the terminal apparatuses R1, R2, and R3 start counting time. After an elapse of time t1, the terminal apparatus R1 returns a response to the network, and receiving the response, the network stops the ringing signal to the terminal system. Detecting the stop of the ringing signal, the timers 12 in all the terminal apparatuses R1, R2, and R3 stop and are reset, and then, an operation or receiving data is carried out in the terminal apparatus R1.

When the terminal apparatus R1 is in an alarm state, for example, due to running out of paper, when the above time out t1 is detected in the accord detection unit 14, the main control unit 12 controls the response sending unit 18 not to send a response. Then, after an elapse of time t2, the terminal apparatus R2 sends a response to the network. Receiving the response, the network stops the ringing signal to the terminal system. When the ringing signal stops, the timers 12 in all the terminal apparatuses R1, R2, and R3 are reset and stop, and then, an operation of receiving data is carried out in the terminal apparatus R2.

Thus, the reception of the data is preferentially carried out in the order of the lengths of the preset times t1, t2, and t3, without a collision of signals from the plurality of terminal apparatuses in the terminal system.

Although the response time is preset in the above operation, alternatively, it is possible to input a priority order to the terminal apparatus by a similar operation. In this case, the MPU 23 in the construction of Fig. 2 or the main control unit 12 in the construction of Fig. 11 may calculate a preset time based on the priority order, and a higher priority order corresponds to a shorter preset time.

Further, the amount of the preset time may be about hundreds of milliseconds, which is sufficiently longer than the amount of the aforementioned individual difference of the response time in the conventional terminal apparatuses.

## Claims

1. A terminal system comprising:
a plurality of terminal apparatuses (9, 106);
an interface means (8, 19);
a two-way bus line (5, 105) connecting thereto said plurality of terminal apparatuses (9, 106);
said interface means (8, 19), being able to be connected on one side thereof to a communication network, and being connected on the other side thereof to said two-way bus line (5, 105), for functioning as an interface between said communication network and each of said plurality of terminal apparatuses (9, 106) regarding two-way transmission of data signals and control signals for the transmission of the data signals;
each of said plurality of terminal apparatuses (9, 106) comprises,
an incoming call detecting unit (28, 17) for detecting an incoming call to which the terminal apparatus can respond, where said incoming call detecting unit belongs to the terminal apparatus, and
a responding means (23, 12, 18) for responding to an incoming call which is detected in said incoming call detecting means (28, 17), where said responding means (23, 12, 18) having a response time needed to response to the incoming call, which is intrinsic to each terminal apparatus; characterized in that
each of said plurality of terminal apparatuses further comprises a timer means (24, 13, 14, 15) for detecting that a time elapsed from a time at which an incoming call is detected in said incoming call detecting means (28, 17), reaches a preset time;
said responding means (23, 12, 18) in each terminal apparatus starts an operation of responding to the incoming call when said timer means detects that said elapsed time reaches said preset time; and
an order of priority to respond to an incoming call is predetermined over said plurality of terminal apparatuses, and lengths of the preset times in the plurality of terminal apparatuses are preset in the order of the predetermined priority.

2. A terminal system according to claim 1, wherein said timer means (13) in each of said plurality of terminal apparatuses further comprises,
a time counting means (13) for counting time,
a preset time registering means (15) for registering said preset time, and

an accord detection means (14) for comparing the time counted in said time counting means (13) and the preset time registered in said preset time registering means (15).

3. A terminal system according to claim 1, wherein each of said plurality of terminal apparatuses further comprising a manual preset time input means (11) for manually inputting said preset time.

# Fig. 1

ISDN NET — DSU — [A] [B] [C] [D] [E] [F] [G] [H]

# Fig. 2

TIMER — 24

MPU — 23

KEYBOARD CONTROL UNIT — 22

PROGRAM ROM — 29

21

LCD DISPLAY — 25

DISPLAY CONTROL UNIT — 26

PROGRAM WORKING MEMORY — 30 — RAM

SET DATA MEMORY — 31

CODED IMAGE DATA MEMORIZING UNIT — 27

CG DEVELOPING CIRCUIT — 32

CHARACTER IMAGE ROM — 33

COMMUNICATION CONTROL UNIT — 28

DECOMPRESSING CIRCUIT — 34

PRINT CONTROL CIRCUIT — 35

PRINTER — 36

READING CONTROL CIRCUIT — 37

SCANNER — 38

# *Fig. 3*

START —61

62) "SETUP" RECEIVED? —N

Y

63) ONE T.A. IS ADDRESSED ? —N → TO NORMAL PROCESSING FOR INCOMING CALL

Y

64) ABLE TO RECEIVE ? —N

Y

START TIME COUNT —65

N— TIME OUT ? —66

Y

SEND CONNECT —67

71— SEND "DISCONNECT"

N— "RELEASE" RECEIVED ? —75

Y

SEND "RELEISE COMPLETE" —76

"RELEASE" RECEIVED? —68 —Y

N

N— "CONNECT COMPLETE" RECEIVED? —69

Y

TRANSFER DATA —70

N— "DISCONNECT" RECEIVED ? —71

Y

SEND "RELEASE" —72

N— "RELEASE COMPLETE" RECEIVED ? —73

Y

77— END

# F l g. 4

# F I g. 5

EP 0 429 300 A2

# Fig. 6

14

## F I g. 7

LCD DISPLAY

INPUT RESPONSE TIME

| 1 | 2 | 3 | SET |
| 4 | 5 | 6 | COMPLETE |
| 7 | 8 | 9 | STOP |
| # | 0 | * | START |

FUNCTION

■:KEY

## F I g. 8

DISPLAY NO.1

READY

PUSH "FUNCTION"

DISPLAY NO.2

SELECT A NUMBER OF FUNCTION

OTHER NUMBER FOR ⇨⇨⇨⇨OTHER FUNCTION

PUSH "I" FOR INPUTTING RESPONSE TIME

DISPLAY NO.3

INPUT RESPONSE TIME
I:RESPONSE:__00ms

PUSH "1", AND THEN "0"

DISPLAY NO.4

PUSH SET KEY
I:RESPONSE: 1000ms

DISPLAY NO.1    PUSH "SET"

READY

# Fig. 9

START —80

② 

INCOMING CALL? —81
Y — TO STEP 61 OF Fig3
N

KEY INPUT? —82
N
Y

"FUNCTION" —83
N — TO OTHER OPERATION
Y

INDICATE DISPLAY NO.2 —84

KEY INPUT? —85
N
Y

"1"? —86
N
Y — TO OTHER OPERATION

INDICATE DISPLAY NO.3 —87

KEY INPUT? —88
N
Y

"0" to "9"? —89
N
Y
③

③ —90
SAVE INPUT

KEY INPUT —91
N
Y

"0" to "9"? —92
N
Y

SAVE INPUT —93
①

① 
INDCATE DISPLAY NO.4 —94

KEY INPUT? —95
N
Y

"SET"? —96
N
Y

INDICATE NO.1 —97
②

16

# Fig. 10

ANALOG NETWORK 104

105

106

R1    R2    · · · ·    Rn

# Fig. 11

PRESET TIME INPUT UNIT 11

MAIN CONTL 12

TIMER 13

ACCORD DETECTION 14

PRESET TIME REGISTERING 15

RECEPTION UNIT 16

INCOMING CALL DETECTING 17

RESPONS SENDING UNIT 18

NCU 19

105

EP 0 429 300 A2

# F I g. 12